# EUROPEAN PATENT SPECIFICATION

(11) **EP 3 938 736 B1**
(45) Date of publication and mention of the grant of the patent: **10.05.2023**
(21) Application number: 20718769.1
(22) Date of filing: 12.03.2020
(51) Int. Cl.: G01D 11/24, G01D 18/00, G01D 21/00, G01K 1/08, G01M 3/00, H05K 5/06

(54) **AN ELECTRONIC DEVICE FOR THE DETECTION AND MONITORING OF PARAMETERS ASSOCIATED WITH A PHYISICAL QUANTITY**
ELEKTRONISCHE VORRICHTUNG ZUR ERFASSUNG UND ÜBERWACHUNG VON EINER PHYSIKALISCHEN GRÖSSE ZUGEORDNETEN PARAMETERN
DISPOSITIF ÉLECTRONIQUE DE DÉTECTION ET DE SURVEILLANCE DE PARAMÈTRES ASSOCIÉS À UNE QUANTITÉ PHYSIQUE

(30) Priority: 12.03.2019 IT 201900003575
(43) Date of publication of application: 19.01.2022
(73) Proprietor: B.M. TECNOLOGIE INDUSTRIALI S.R.L., 35030 Rubano (PD) (IT)
(72) Inventor: BONELLO, Claudio, 35032 Arquà Petrarca (PD) (IT); GHIROTTO, Manuel, 45020 Lusia (RO) (IT)
(74) Representative: De Gaspari, Andrea
(86) International application number: PCT/IB2020/052194
(87) International publication number: WO 2020/183403

(56) References cited:
- WO-A1-2018/035124
- US-A1- 2014 193 294
- US-A1- 2015 177 220
- US-A1- 2018 045 621

## Description

### Field of application of the invention

The present invention concerns the technical field of the equipment for monitoring and processing data, and the subject of the invention is an electronic device for monitoring and processing data associated with a physical quantity.

### State of the art

As is known, in the sector of the detection of parameters associated with a physical quantity it is often necessary to monitor a plurality of physical parameters associated with the instant conditions of a fluid.

For example, in the sector of detection operations related to water supply or sewage networks it is often necessary to measure the temperature of the fluid, or its flow rate or its level inside the pipe, and it should also be noted that last generation instruments also make it possible to carry out measurements in real time regarding the composition of the fluid flowing inside the pipe.

The sensors and the electronic detection device are generally installed inside manholes, underground rooms or similar places, where there is a high degree of humidity or which are subjected to be partially or completely filled with the fluid in certain conditions.

The service life and the correct operation of these devices considerably depend on their ability to guarantee the insulation of all the electrical parts and internal batteries from any contact with water and/or fluid.

It is important to underline that these pieces of equipment are designed to remain positioned in said environments (in contact with liquids, vapours and humidity) for very long periods of time, generally a few years.

In order to ensure the correct operation of the equipment it is essential that the mechanical seals of the casing which covers the electronic circuits and the batteries are such as to guarantee absolute tightness with respect to the penetration of fluids and/or water.

The same problem has been known for some time also in all those technical sectors involved in the production of electronic components (sensors, processing units etc.) intended to be installed in places where they are in contact with liquids and/or fluids.

For example, US5670745 describes a casing which is suited to be tightly sealed and is provided with a pair of half shells among which a sealing gasket is interposed.

The cable signal in inserted through a hole which is kept fluid tight by means of a resin-coated gasket designed to be pressed by one of the two half shells, so that the insulation of the cable with respect to the fluid is obtained independently of the tightness created between the two half shells.

The WO2018/035124 describes an electronic device suited to detect the conditions of a fluid (in this specific case, concrete) and to transmit, in wireless mode, a plurality of details associated with said fluid.

The external casing is made of a plastic material or another material suited to ensure a reduced attenuation of the electromagnetic signal transmitted towards the outside by the processing unit contained inside the casing itself. There is also a pair of half shells suited to be tightly coupled with each other along a coupling edge.

The EP3130900 describes a multi-sensor electronic device suited to be used to inspect a pipe with a fluid flowing therein. Inside said device there are a pressure sensor, an acoustic hydrophone and a camera suited to be activated for the inspection and the movement of the equipment through the pipe. The acoustic hydrophone makes it possible to detect the noise generated by the losses present in the pipe and the device is connected to a cable to allow it to be positioned inside the pipe.

Even in this case, the external casing is fluid tight, being made up of parts that can be assembled together and interact with one or more flexible sealing gaskets.

US2018/0045621 describes a detection device whose casing is cylindrical in shape and comprises a cavity suited to contain a concrete test element, an accelerometer suited to detect the movement data and a second sensor suited to obtain measurements of a characteristic of the concrete during a predetermined time period.

The second sensor can be a temperature sensor and there is also a processor configured to receive the movement data from the accelerometer, in such a way as to determine the movements of the device. Finally, the data concerning the movement are interpolated with the measurements obtained by the second sensor in order to carry out a numerical analysis on the test to which the concrete has been subjected over a predetermined time period.

The main drawback of the devices described above lies in that they do not maintain constant tightness to the fluid over time and they are not able to generate data associated with said condition of tightness.

This last aspect is particularly important, as knowing the actual condition of the closing would allow the service provider to carry out the necessary maintenance operations on the equipment before it breaks down definitively or before the occurrence of malfunctions.

The devices described above, furthermore, feature a configuration of the closing of the two half shells which was designed without considering that the device must remain immersed in the fluid for long time intervals without an operator being able to inspect it.

All the devices mentioned above, in fact, are immersed in the fluid for short time intervals and are often checked by an operator, therefore the configuration of the closing is not extremely accurate, rather, it is often made on a low budget.

Another, not less important drawback of these devices is represented by the fact that the same are not suited to be used in extreme conditions like those present in underground water and sewage pipes.

During use, in fact, the conditions of the fluid are relatively constant and not particularly complex, therefore also the closing of the half shells and their configuration are suitable for these conditions of use.

US2014/193294 discloses a sanitation system using ozone and having all the technical characteristics described in the preamble of claim 1. However, also this system is affected by the inconveniences described above, since it is not suited to be used in environments characterized by high humidity or in contact with fluids and/or gases.

### Presentation of the invention

The present invention intends to overcome the drawbacks mentioned above by providing an electronic device for monitoring and processing data associated with a physical quantity which makes it possible to provide information on the condition of the closing.

It is a further object of the present invention to provide an electronic device for monitoring and processing data associated with a physical quantity that is particularly resistant and makes it possible to schedule maintenance operations to be carried out by an operator before the occurrence of destructive events.

It is another object of the present invention to provide an electronic device for monitoring and processing data associated with a physical quantity that is simple to construct and has relatively low costs.

Again, it is a not less important object of the present invention to provide an electronic device for monitoring and processing data associated with a physical quantity that is configured to operate even for long time intervals in extreme conditions, even in constant contact with one or more fluids.

These objects are achieved by an electronic device for monitoring and processing data associated with a physical quantity of the type according to claim 1.

Other objects that are described in greater detail below are achieved by an electronic device for monitoring and processing data associated with a physical quantity according to the dependent claims.

### Brief description of the drawings

The advantages and the characteristics of the present invention will clearly emerge from the following detailed description of some preferred but non-limiting embodiments of an electronic device for detecting the parameters associated with a fluid, with specific reference to the following drawings:
- **Figure 1** shows a view of an electronic device according to the invention installed inside a pipe and connected to a plurality of sensors suited to detect the conditions of a fluid;
- **Figure 2** shows a perspective view of the electronic device of Figure 1;
- **Figure 3** shows a first enlarged detail of the device of Figure 2;
- **Figure 4** shows a second detail of the device of Figure 3;
- **Figure 5** shows a sectional view of the details of Figure 3 and Figure 4 in the assembled position;
- **Figure 6** shows a perspective view of a third detail of the device of Figure 1;
- **Figure 7** shows a specific sensor used in the device of Figure 1;
- **Figure 8** shows a sectional view of the coupling of the half shells used in the electronic device of Figure 1;
- **Figure 9** shows a perspective view of the sensor of Figure 7 in the position of installation;
- **Figure 10** shows a printed circuit used in the device of Figure 1, with further specific sensors and printed circuits welded thereon.

### Detailed description of the invention

The subject of the present invention is an electronic device designed to be placed inside an installation environment in order to manage, that is, to store and/or process, a plurality of parameters **P** associated with one or more physical quantities present in the installation environment.

This electronic device, hereinafter indicated by the reference number **1,** is configured to be installed in environments characterized by high humidity or is intended to come into direct contact with fluids and/or gases present inside the installation environment.

More specifically, the electronic device **1** can be intended to process data transmitted by several sensors suited, for example, to detect the operating conditions of a fluid and/or the conditions of the installation environment and/or the chemical-physical properties of a material and/or the electrical quantities associated with an electric/electronic circuit.

By way of example, the electronic device illustrated in figures from **1** to **10** can be used to detect the parameters **P** respectively associated with fluids **P** of various types with a composition comprising water and organic substances or gases that are generated during the processing or the fermentation/digestion of the latter.

In the last case, therefore, the device described below can be used to analyse the fluids present inside the pipes of a water supply or sewage network.

As is known, organic and inorganic sewage waters flow into the pipes and can also promote the diffusion of humidity or gas in the environment.

Therefore, the device that is the subject of the present invention is at least partially immersed in said fluids and in direct contact with the gases present inside the pipes.

The present invention can be used even in contexts different from the one described above, for example for industrial transformation or control processes, or in electronic communication or signal processing systems.

Even in this case, the environment in which the device **1** is installed will be such as to promote the direct contact of the latter with fluids and/or gases.

The electronic device 1 comprises one or more electronic processing units 2 connected to the sensors 3, the latter being configured to detect some data or electrical parameters P generated by the same sensors and associated with the physical parameters of the fluid F or other physical quantities present inside a pipe **C.**

For example, the sensor means **3** can be configured to measure the temperature of the fluid **F** and/or its pressure or flow rate inside the pipe **C.**

According to the invention, further acoustic sensors **3** or phonometers may be provided, which are suited to detect the acoustic waves produced by the fluid **F** inside the pipe **C.** The monitoring of the acoustic waves can provide useful information on the losses or leakages of liquid or fluid inside the pipe **C.**

It is also possible to use particularly complex sensors, for example of the type configured to make a spectroscopic analysis of the fluid **F,** wherein said sensors make it possible to detect the composition of the liquid and the concentrations of the elements that make it up.

In the present description, the word "sensors" is generally used to indicate a set of electric transducers suited to detect one or more physical quantities present in the installation environment. This set of sensors can be installed inside the same casing containing the electronic unit **2** or, as it happens more frequently, it can be constituted by distinct elements, each of which needs to be installed independently and separately inside the pipe **C.**

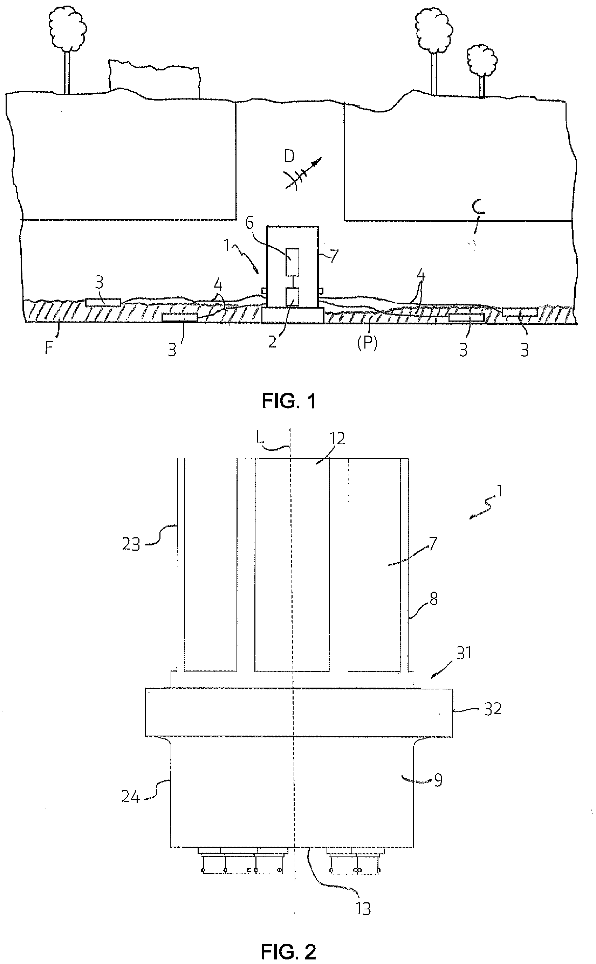

In the configuration of the invention shown in **Figure 1****,** the sensors **3** are distributed along the pipe **C** and connected to a single electronic processing unit **2** through respective connection cables **4.**

However, in alternative embodiments of the invention that are not illustrated in the Figures, the sensors **3** may be connected to the corresponding electronic processing unit **2** through a wireless radio frequency connection that does not require the use of wired connections.

In this case, all the sensors **3** and the electronic processing unit **2** are provided with a receiver-transmitter device suited to receive and transmit the wireless radio frequency signal.

Each sensor **3** connected to the device **1** is able to transduce the specific physical quantity associated with the fluid (temperature, pressure, flow rate etc.) into a corresponding electrical detection signal **s₃** that will be sent to the electronic unit **2** through a cable **4** or through a radio connection.

According to the type of sensors **3** used in the device, the detection signals **s₃** can be digital and/or analog.

The electronic processing unit **2** is configured to receive the detection signals **s₃** in order to process them and obtain information on the current condition of the fluid **F.**

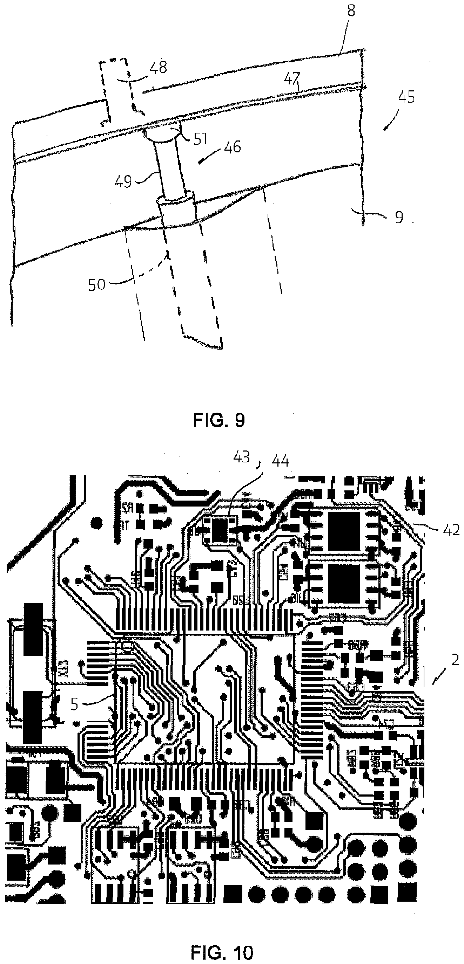

The electronic processing unit **2** can thus comprise a processor **5** (visible in **Figure 10**) specifically programmed to modify the detection signals **s₃** in such a way as to obtain numerical data **D** associated with the conditions of the fluid **F.**

The electronic unit **2** can also comprise one or more analog/digital conversion modules, not illustrated in the figures, interposed between the output of the analog sensor **3** and the processor **5** to promote the conversion into the digital form of the corresponding detection signal **s₃** before it enters the processor **5.**

The electronic unit **2** can be configured to process the detection signals **s₃** in a continuous manner in order to monitor the condition of the fluid **F** in real time.

As an alternative to the above, the electronic unit **2** can also be configured to promote a "sample" processing of the detection signals **s₃** (meaning processing carried out according to predetermined time intervals), in such a way as to determine the condition of the fluid **F** only at predetermined time instants.

It is understood that the electronic unit **2** can be programmed in such a way as to change the detection mode (continuous or sample detection) according to the needs and furthermore can apply one of these modes to a subset of sensors **3** while operating with the remaining sensors **3** in a different mode.

Following the processing of the detection signals **s₃,** the electronic unit **2** can transmit the data **D** associated with the condition of the fluid **F** to a remote device, not illustrated in the figures, or it can store said data **D** in a local memory circuit associated with the device **1,** not illustrated in the figures, either.

In order to allow the remote transmission of the data **D,** the electronic processing unit must be operatively connected to an external device through a wired or wireless data connection.

More specifically, the electronic unit **2** can be connected to the Internet through a modem device, not illustrated in the Figures.

The modem device makes it possible to establish a connection between the electronic unit and a remote device (for example, a mobile device or a server) in such a way as to promote the transfer of the data **D** associated with the fluid **F.**

The electronic unit **2** can be integrated with the modem device and comprise a module suited to request the introduction of a SIM card configured to establish a connection with the data network through the known mobile radio systems already used for cellular telecommunications (for example, 2G, 3G, 4G etc.).

The device illustrated in the figures is configured to communicate with the outside in wireless mode and therefore the electronic unit is physically connected to an antenna, schematically shown in **Figure 1** and indicated by the reference number **6,** having predetermined shape and size suited to allow the transmission and reception of the data **D** with a signal with predetermined frequency.

The antenna **6** can be obtained using a conductive area of a printed circuit (pcb antenna) which can be connected to the electronic unit **2** in a removable manner through a suitable connector, not visible in the Figures.

The size and shape of the PCB antenna **6** are calculated in such a way as to allow the transmission of data in the bands 900MHz-1800MHz (2G) and/or 900MHz-2100MHz (3G) and/or 800MHz-1800MHz-2600MHz-2100MHz (4G).

The device **1** that is the subject of the present invention may also comprise a GPS module, known per se and not illustrated in the Figures, having the function to receive/transmit further numerical data associated with the geolocalization of the device **1.**

Also this data can be successively used by a platform or a remote device to localize the exact position of the device **1** inside the pipe.

The device **1** furthermore comprises a hollow protection shell **7** designed to contain at least the electronic processing unit **2.**

The shell **7** can also contain the sensors **3** when these are of the integrated type, even if it should be specified that in such a circumstance a portion of the latter must be positioned outside the shell **7** to come into direct contact with the fluid **F** and thus generate the corresponding detection signal s₃.

When the sensor means **3** are of the independent type, meaning carried out through a set of distinct and independent transducer elements, the processing unit **2** will be inserted in the shell **7** while a plurality of connectors, not illustrated in the Figures and located outside the shell **7,** will be provided to allow the physical connection of the processing unit **2** to the various cables **4** connected to the sensors **3.**

A battery, not illustrated in the Figures and suited to supply power to the electronic control unit **2** and/or to the sensors **3** (when these are not provided with a power supply of their own) can be placed inside the shell **7.**

As can be better seen in **Figures 2****,** **3****,** **5** and **6****,** the shell **7** can be constituted by two half shells **8, 9** suited to be mutually coupled with each other.

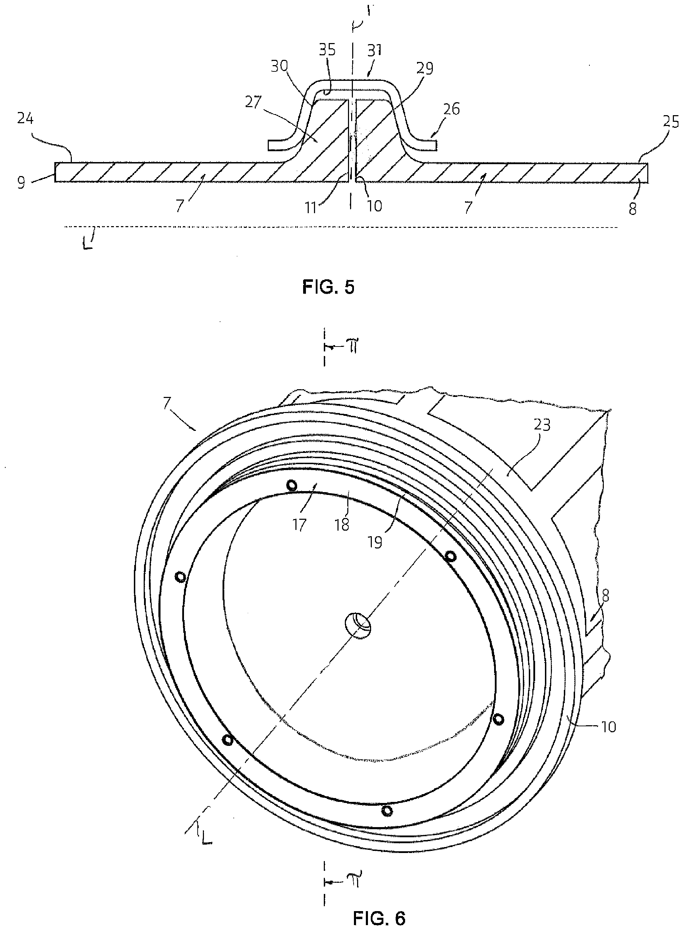

More specifically, the shell **7** can extend along a longitudinal direction of development **L** and the two half shells **8, 9** can be selectively coupled with each other at two end edges **10, 11,** both clearly visible in **Figure 5****.**

The end edges **10, 11** are transversal, as they extend along a direction which is substantially orthogonal to the longitudinal direction of development of the shell **7.**

In the case of the electronic device **1** illustrated in the figures, the shell **7** has a substantially cylindrical external shape and is closed at the ends by a pair of transversal walls **12, 13.**

Each half shell **8, 9** defines a corresponding portion of this cylinder and comprises, in addition to a corresponding transversal wall **12, 13,** a substantially transversal edge **10, 11** intended to be coupled with an edge **11, 10** having the same shape and obtained on the other half shell **13, 12.**

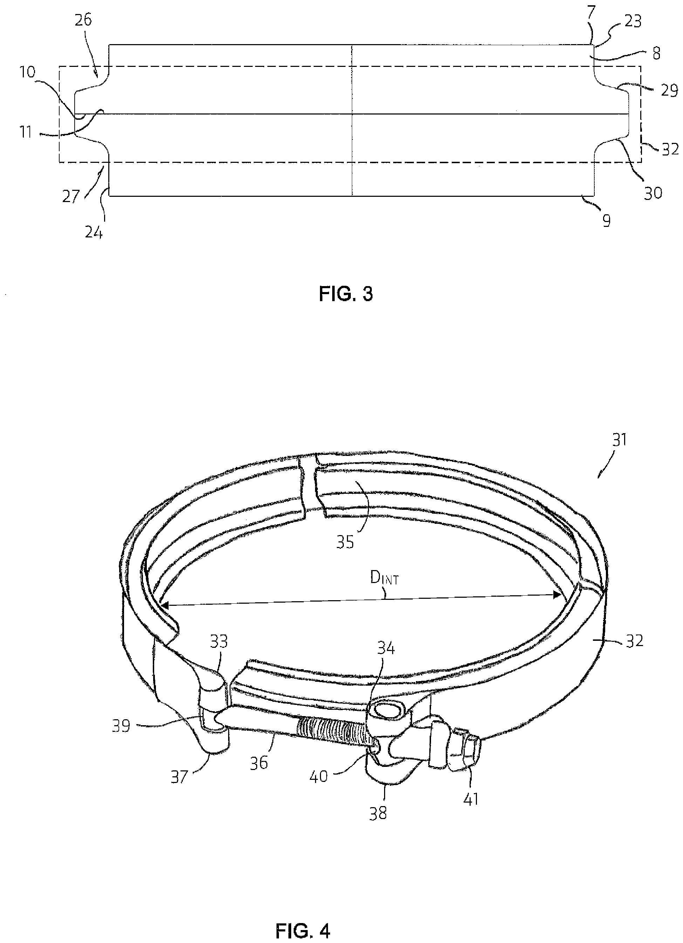

The coupling of the end edges **10, 11** of the half shells **8, 9** can be seen more clearly in **Figure 3****,** **Figure 5** and **Figure 8****.**

Each half shell **8, 9,** taken individually, defines a respective half cavity (in a substantially cylindrical shape, too) and each cavity is delimited by a corresponding transversal wall **12, 13.**

When the half shells **8, 9** are not coupled (and the shell is open), it is possible to insert the various components of the device **1** (for example, the electronic processing unit **2,** the antenna **6** and the battery) inside the half cavities.

The coupling of the half shells **8, 9** makes it possible to close the shell **7** and define the whole cavity associated with the latter (obtained by moving the respective half cavities of the half shells **8, 9** near each other).

The shell **7** shown in the Figures thus features a cylindrical cavity delimited by the two transversal walls **12, 13** of the half shells **8, 9.**

The end edges **10, 11** are in the mutually coupled position when they are a) mutually in contact with each other or *b)* slightly spaced from each other. By way of example, the edges **10, 11** can be coupled even if they are separated by a small distance, generally included between 0.1 mm and 1.5 mm.

The shell **7** is closed when the edges **10, 11** are in one of these two conditions (completely in contact with each other/slightly spaced) and in this configuration the inner cavity cannot be accessed from the outside.

As is better explained further on in this description, the coupling of the two half shells **8, 9** can be partial or total, and in the latter case the shell **7** will be substantially sealed, that is, fluid and/or gas tight.

Therefore, when the coupling between the two half shells **8, 9** is total, the inner cavity of the shell **7** is completely insulated from the fluids and/or gases that are in direct contact with the device **1.**

The fluid tight closing of the half shells **8, 9** is obtained thanks to the synergic effect determined by the mechanical contact between the respective end edges **10, 11** and by the action of a suitable sealing gasket **14** acting on said edges **10, 11.**

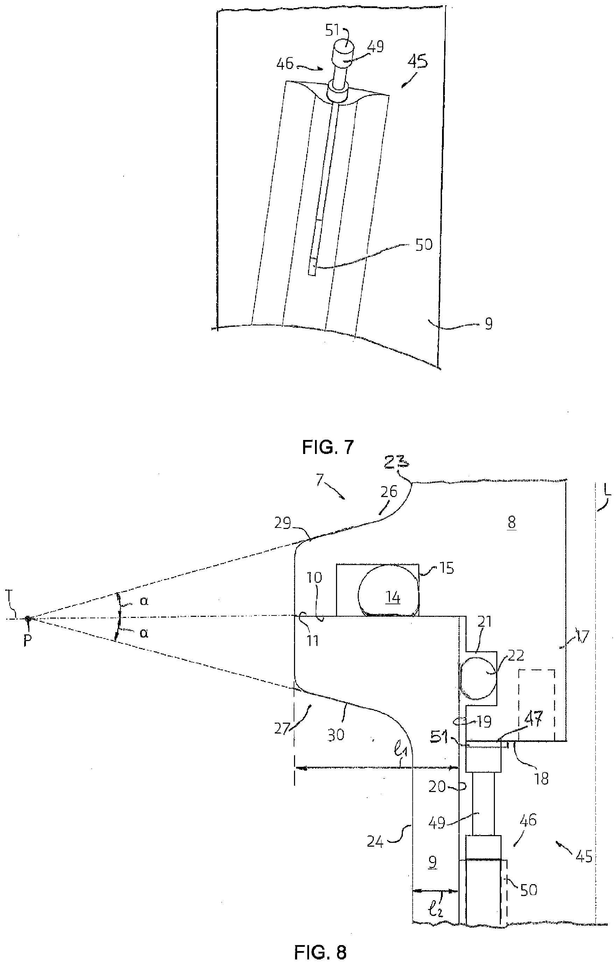

As can be clearly seen in **Figure 8****,** a longitudinal seat **15** is provided, which is obtained on the end edge **10** of a corresponding half shell **8.**

This seat **15** extends along the entire annular development of the half shell **8** (for example, the upper half shell) in such a way as to allow it to house the sealing gasket **14,** whose external surface is suited to interact with the end edge **11** when the two half shells **8, 9** are in the mutually coupled position.

As is better visible in **Figure 8****,** one of the half shells **8, 9** may comprise a projection **17** integral with the respective end edge **10, 11.**

Said projection **17** can be provided with a transversal surface **18** that extends along at least one portion of the end edge **10, 11** of the corresponding half shell **8, 9.**

The word "transversal" used in this description indicates elements or surfaces that extend along directions **T** or along planes **π** which are substantially orthogonal to the direction of development **L** of the shell **7.**

In the case illustrated in the figures, the projection **17** is located on the upper half shell **8** and is constituted by a cylindrical portion that extends downwards starting from the corresponding end edge **10.**

The projection **17** can be transversally offset inwards with respect to the end edge **10** of the corresponding half shell **8.**

More specifically, as better illustrated in **Figure 8****,** the inward position of the projection **17** can be selected in such a way as to arrange the external surface **19** of the projection **17** substantially level with the internal surface **8, 20** of the other half shell **9,** and this when the half shells **8, 9** themselves are coupled and the shell **7** is closed.

In order to further improve the tightness of the shell **7** with respect to the fluid **F,** it is possible to make a transversal annular seat **21** on the external surface **19** of the projection **17,** said transversal annular seat **21** being intended to house a further sealing gasket **22** whose external surface interacts with the internal surface **20** of the other half shell **9.**

As can be better seen in **Figures 2****,** **3****,** **5** and **6****,** the external surface **24, 25** of the half shells **8, 9** may comprise respective shaped transversal extensions **26, 27** which are substantially positioned in proximity to the corresponding end edges **10, 11.**

The transversal extension **24, 25** are obtained in a particular position selected in such a way as to allow them to be positioned side by side when the half shells **8, 9** are coupled and the shell **7** is closed.

Advantageously,the transversal extensions **24, 25** are directed inwards and may comprise a plane section, clearly visible in **Figure 5** and indicated by the reference number **28,** suited to define the end edge **10, 11** of the respective half shells **8, 9.**

Conveniently, as better illustrated in **Figures 3** and **5****,** the external surface **24, 25** of the half shells **8, 9** may be provided with a substantially tilted section **29, 30** on the respective transversal extensions **26, 27.**

When the half shells **8, 9** are coupled, the tilted sections **29, 30** are in a longitudinally adjacent position and in this condition the end edges **10, 11** are substantially in mutual contact.

As is better visible in **Figure 8****,** in this position the sections **29, 30** of the extensions are tilted with respect to a transversal direction **T** and more specifically said tilt has a tilt angle **α** which is such as to make them converge towards a point **P** located outside the shell **7.**

Conveniently, the device **1** comprises also coupling means **31** associated with the shell **7,** which allow the half shells **8, 9** to be coupled with each other and contribute to making them tight with respect to the fluid **F.**

More specifically, as clearly visible in **Figures 4** and **5****,** the coupling means **31** of the half shells **8, 9** may comprise a lock nut **32** in a substantially annular shape, having a pair of free ends **33, 34** and an internal surface **35** that is complementary to that of the transversal extensions **26, 27** of the half shells **8, 9.**

The internal surface **35** of the lock nut **32** is shaped in such a way that it can be coupled with the tilted sections **29, 30** of the extensions **26, 27** when the same are mutually arranged side by side, as clearly visible in **Figure 5****.**

The lock nut **32,** therefore, is suited to at least partially cover the transversal extensions **26, 27** in such a way as to promote the interaction between the shaped sections **29, 30** of the latter with its internal complementary surface **35.**

The lock nut **32** can be made of a relatively flexible metallic material, in such a way as to allow an operator to respectively superimpose it to the transversal extensions **26, 27** or remove it.

As is better visible in **Figure 4****,** the free ends **33, 34** of the lock nut **32** are associated with a tie rod **36** that can be operated by a user in order to selectively move said free ends **33, 34** towards or away from each other.

More specifically, the movement of the ends **33, 34** of the lock nut **32** towards each other will result in a progressive reduction of the inner diameter **Dᵢₙₜ** of the lock nut **32** itself. When the lock nut **32** is positioned on the transversal extensions **26, 27** the mutual movement of its ends **33, 34** towards each other is such as to promote a transversal movement (towards the inside of the shell **7**) of its internal surface **35** due to the progressive reduction of the inner diameter **D_{int.}**

This movement towards the inside of the internal surface **35** of the lock nut **32** will be such as to promote the mutual locking of the half shells **8, 9** in their coupling position.

More specifically, when the transversal extensions **26, 27** have a tilted external section **29, 30** like the one visible in the configuration shown in **Figure 5** (and consequently the internal surface **35** of the lock nut **32** is conveniently complementary to the shape of said tilted sections **29, 30**), the movement of the ends **33, 34** of the lock nut **32** towards each other will cause the internal surface **35** to slide towards the inside on the tilted sections **29, 30.**

The effect generated by this sliding movement is to promote the mutual movement of the two end edges **10, 11** of the half shells **8, 9** towards each other along a longitudinal (or axial) direction.

In this way, it is possible to enhance the mechanical interaction of the two end edges **10, 11** and their tightness with respect to the fluid **F.**

On the free ends **33, 34** of lock nut **32** it will be possible to obtain two edges **37, 38** provided with a pair of holes **39, 40** suited to allow the insertion of a threaded tie rod **36** provided with a head **41** that interacts with a corresponding edge **38.** At least one hole **40** of said pair is threaded, in such a way as to allow the selective screwing/unscrewing of the tie rod and the consequent movement of the ends **33, 34** of the lock nut towards/away from each other.

In the configuration of the invention illustrated in the figures, the lock nut **32** and the tie rod **36** can substantially reproduce a closing movement of the clamping type, already used in several technical applications to maintain two distinct, removably coupled elements in a mutually locked position.

As already described above, the electronic processing unit **2** comprises a printed circuit **42,** visible in **Figure 10****,** provided with a temperature sensor **43** and a humidity sensor **44** suited to measure the temperature and the humidity inside the cavity of the shell **7.** These sensors **43, 44** can be embedded in a single chip mounted on the printed circuit **42.**

These sensors generate corresponding control signals **s_{43,} s₄₄** (associated with the instant temperature and humidity present inside the cavity) which are sent to the electronic control unit **2** to be successively processed by the latter.

The electronic unit **2,** in fact, is configured to generate an alarm signal **s_{A}** in the case where, following said processing step, the temperature value and/or the humidity level inside the shell exceed a predetermined threshold value.

In this way it is possible to monitor the environmental conditions present inside the shell **7** in real time and to send the alarm signal **s_{A}** to a remote device through the wireless or wired connection.

According to a particular aspect of the invention, monitoring means **45** are provided, which are designed to monitor the condition of the coupling between the two half shells **8, 9.**

The monitoring means **45** are able to generate an electrical signal **s₄₅** whose parameters can vary according to the instant closing condition generated by the coupling of the half shells **8, 9.**

Said signal **s₄₅** is sent to the electronic unit **2** which is able to process it and generate an alarm signal **s_{A}** (if any) in the case where said closing is not completely tight with respect to the fluid **F.**

Conveniently, the monitoring signal **s₄₅** varies according to two specific closing conditions: the first one is a condition of absolute tightness with respect to the fluid, while the second one is a condition of partial tightness with respect to fluids and/or gases or a condition of total permeability to fluids and/or gases; obviously, in the second condition fluids and gases can leak into the shell **7** and fill the cavity partially or completely.

Said total and/or partial closing of the shell **7** is a condition that occurs when the half shells **8, 9** are coupled and adjacent to each other. In these conditions the shell **7** is always closed, meaning that it is not possible to access its inner cavity, but the condition of the closing can be different, depending on whether absolute or partial tightness with respect to fluids or gases is achieved.

The complete closing of the shell **7** can take place when the end edges **10, 11** of the half shells **8, 9** are in mutual contact, while the partial closing of the shell **7** can take place when the end edges **10, 11** of the half shells are slightly spaced from each other (as described in paragraph [0078]).

More specifically, in the condition in which the shell **7** is completely closed, the cavity is insulated from the outside and the contact of the sealing gasket **14** (and of the gasket **22,** if provided) with the end edges **10, 11** (or with the internal surface **20**) is such as to achieve absolute tightness with respect to the fluid and/or gases.

In the condition in which the shell **7** is partially closed, the cavity is insulated from the outside but the interaction of the gasket **14** (or of the gaskets **14, 22**) with the respective edges **10, 11** and/or surfaces **20** is weak and such as to generate a contact that is not completely fluid and/or gas tight.

In these conditions, therefore, a partial penetration (or leak) of the fluids **F** or gases into the cavity of the shell **7** can occur.

Conveniently, the information contained in the monitoring signal **s₄₅** are suited to make it possible to detect the two closing conditions described above (total or partial).

More specifically, the monitoring signal **s₄₅** is suited to detect both the tight coupling of the half shells **8, 9** (which ensures the complete insulation of the shell **7** from humidity, fluids **F** and/or gases) and the partial coupling of the half shells **8, 9** (which can facilitate the passage of humidity, fluids **F** and/or gases into the cavity).

The monitoring signal **s₄₅** thus makes it possible to detect the condition of the closing in real time when both the half shells **8, 9** are in the coupled position and the cavity located inside the shell **7** cannot be accessed from the outside.

The alarm signal **s_{A}** generated by the electronic processing unit **2** can furthermore be sent (through a wireless or wired connection) to an electronic device and/or to a remote server, in such a way as to provide information to an operator concerning the possible breakages or malfunctions that may affect the device **1** due to the reduced tightness with respect to the fluid **F.**

Preferably, as better illustrated in **Figures** from **6** to **9,** the monitoring means **45** may comprise a plurality of contact sensors **46** designed to monitor the mutual instant interaction between the end edges **10, 11** of the half shells **8, 9** (when the same are in the coupled position).

In this way, the contact sensors **46** will be able to detect the total or partial closing of the half shells **8, 9,** as described in paragraphs [00117] - [00123].

The contact sensors **46** are thus configured to monitor the mutual contact (or coupling) of the end edges **10, 11** of the half shells **8, 9** in real time.

More specifically, the contact sensors **46** can be distributed along the end edge **10; 11** of a single half shell **8; 9** or along the end edges **10, 11** of both half shells **8, 9.**

Alternatively, as better illustrated in **Figure 8****,** the contact sensors can be distributed along the transversal surface **18** of the projection **17** which, as already described above, is integral with the respective end edge **10** of the half shell **8.**

The presence of a possible longitudinal play between the end edges **10, 11** of the half shells **8, 9** is thus detected by the contact sensors **46** even if these are positioned along the transversal surface **18** of the projection **17.**

Conveniently , the processing unit **2** is configured in such a way as to process the signals coming from the contact sensors **46** (which monitor the closing condition of the half shells **8, 9**) with the signals coming from the humidity sensors **44** and the temperature sensors **43.** Following said processing step, the unit **2** can generate data associated with the operating condition of the device, in such a way as to allow the compliance of the latter to be assessed over time.

As better illustrated in **Figures** from **6** to **9,** the contact sensors **46** may comprise a reference ring **47,** made of a metallic material, positioned on the longitudinal projection **17** of the half shell **8.**

More specifically, the reference ring **47** has a lower surface suited to define the transversal surface **18** of the projection **17.**

This ring **47** is removably anchored to the projection **17** through a plurality of connection dowels or screws **48.**

As can be seen in **Figure 7** and in **Figure 9****,** the contact sensors **46** comprise also active elements **49** having a substantially elongated shape.

These elements **49** are housed inside respective longitudinal seats **50** obtained on a corresponding half shell **9** (in general, the half shell without the projection).

The transversal (or radial) position of the longitudinal seats **50** is selected in such a way as to allow the active elements **49** to be aligned with the reference ring **47;** in this way, when the half shells **8, 9** are in the coupled position the end **51** of the active elements **49** is substantially in contact with the transversal surface **18** of the projection **17** defined by the lower surface of the reference ring **47.**

The active elements **49** are connected to the electronic unit **2** through a cable (not shown in the figures) and the electrical signal **s₄₃** produced by said active elements **49** will feature electrical parameters that vary according to the contact (or distance) detected in that moment between their end **51** and the reference ring **47.**

In the configuration of the device illustrated in the Figures, the active elements **49** of the contact sensors **46** are uniformly distributed along the direction of development of the corresponding end edge **10, 11** of the half shell **8, 9.**

However, in alternative configurations of the invention not illustrated in the Figures, the active elements **49** can be distributed in a non-uniform manner along the corresponding end edges **10, 11** of the half shells (or in a non-uniform manner along the direction of development of the transversal surface **18** of the projection **17**).

In this way, it will be possible to monitor with particular care and precision the coupling condition of specific portions of the end edge **10, 11** of the half shells **8, 9** that are more affected by a possible fluid leakage.

The above clearly shows that the electronic unit **2** is suited to generate data and/or signals concerning the condition of the closing through the use of special sensors **46** applied to the half shells **8, 9** of the shell **7.**

This special configuration makes it possible to provide important information on the operating conditions of the device; more specifically, the processing unit **2** is suited to simultaneously process the signals detected by the sensors **46** that monitor the closing of the half shells and the signals generated by further sensors **43, 44** located inside the shell **7** and designed to monitor other physical quantities (for example, temperature, humidity etc.); following said processing step the processing unit **2** generates a series of data associated with the instant operating conditions of the device.

This data can then be received by an external unit (for example, a server) and saved in a database, in such a way as to allow the technical staff to monitor the operation of the device over time.

The present invention is defined by the appended claims.

The reference numbers and signs included in the claims and in the description have the only purpose of making the text easier to understand and must not be considered as elements intended to limit the technical meaning of the objects or the processes they identify.

## Claims

1. An electronic device for detecting and monitoring electrical parameters (P) associated with one or more physical quantities, said device being adapted to come into contact with fluids and/or gases and comprising:
- at least one sensor (S) suitable for monitoring one or more physical quantities and for generating electrical parameters (P) associated with the latter;
- one or more electronic processing units (2) connected to said at least one sensor (S);
- a hollow protection shell (7) adapted to contain at least said one or more electronic processing units (2), said protection shell (7) comprising two half shells (8, 9) suited to be mutually coupled with each other;
- coupling means (31) associated with said shell (7) and suited to promote the mutual and removable coupling of said half shells (8, 9) and to promote the closing of said shell (7) so that it is substantially gas and/or fluid tight;
- monitoring means (45) designed to generate a monitoring signal (s₄₅) which can vary according to the coupling condition of said half shells (8, 9),
wherein said one or more electronic processing units (2) is suited to process said monitoring signal (s₄₅) and generate an alarm signal (s_{A}) when said shell (7) is closed but not completely gas and/or fluid tight,
**characterized in that** said monitoring signal (s₄₅) allows to detect:
- the tight coupling of said half shells (8, 9), suitable for obtaining the complete insulation of the shell from the humidity and/or from the fluids which are outside the same;
- the partial coupling of said half shells (8, 9), suitable for obtaining partial tightness with respect to the fluids and/or gases which are outside the shell, so that they are allowed to flow into said shell (7).

2. Device as claimed in claim 1, **characterized in that** it comprises respective end edges (10, 11) made on said half shells (8, 9), said end edges (10, 11) being suited to come into contact with each other or to be slightly spaced when the half shells (8, 9) are mutually coupled.

3. Device as claimed in claim 2, **characterized in that** said protection shell (7) extends along a longitudinal direction of development (L) and said end edges (10, 11) extend along a direction (T) which is substantially transversal and orthogonal to said longitudinal direction of development (L).

4. Device as claimed in claim 2 or 3, **characterized in that** it comprises a seat (15) made in the end edge (10) of a half shell (8), said seat (15) extending over the entire extension of the end edge (10) in such a way as to allow a gasket (14) designed to interact with the end edge (11) of the other half shell (9) to be housed therein.

5. Device as claimed in one or more of the claims from 2 to 4, **characterized in that** said monitoring means (45) comprise a plurality of contact sensors (46) associated with said half shells (8, 9) of said shell (7), said contact sensors (46) being connected to said one or more processing units (2) and suited to generate an electric signal (s₄₅) which can vary according to the mutual distance/proximity of said end edges (10, 11) when said half shells (8, 9) are mutually coupled.

6. Device as claimed in claim 5, **characterized in that** said contact sensors are distributed along the end edge (10; 11) of a single half shell (8, 9) or along the end edges (10, 11) of both half shells (8, 9).

7. Device as claimed in claim 5 or 6, **characterized in that** one of said half shells (8, 9) comprises a projection (17) which is integral with said end edge (10, 11) and provided with a surface (18) extending along a plane (π) that is substantially transversal with respect to said direction of development (L) of said protection shell (7).

8. Device as claimed in claim 7, **characterized in that** said contact sensors are distributed along the surface (18) of said projection (17).

9. Device as claimed in claim 3, **characterized in that** said half shells (8, 9) are provided with respective extensions (26, 27) located in proximity to said end edges (10, 11), said transversal extensions (26, 27) extending along directions that are substantially transversal with respect to said direction of development (L) of said shell and being configured to be arranged in a mutually facing position once said half shells (8, 9) have been coupled together.

10. Device as claimed in claim 9, **characterized in that** said coupling means (31) comprise a lock nut (32) provided with a pair of free ends (33, 34) and with an inner surface (35) which is shaped in such a way that it is substantially complementary to said transversal extensions (26, 27) of said half shells (8, 9), said lock nut (32) being suited to be placed on said transversal extensions (26, 27) in such a way as to cover them at least partially and promote the interaction between its inner surface (35) and the shaped outer surface (24, 25) of said extensions (26, 27).

11. Device as claimed in claim 10, **characterized in that** said coupling means (31) comprise a tie rod (36) associated with the free ends (33, 34) of said lock nut (32), said tie rod (36) being suited to be operated by a user to promote the mutual movement of the free ends (33, 34) of said lock nut (32) towards/away from each other once said lock nut (32) has been positioned on the transversal extensions (26, 27) of said half shells (8, 9).

12. Device as claimed in one or more of the claims from 9 to 11, **characterized in that** the outer surface (24, 25) of said half shells (8, 9) has, on the respective extension (26, 27), a tilted section (29, 30) which is convergent towards a corresponding convergence point located outside said shell (7).

13. Device as claimed in claim 12, **characterized in that** the inner surface (35) of said lock nut (32) is shaped in such a way that it is complementary to said tilted sections (29, 30) formed on the outer surface (24, 25) of said half shells (8, 9) to promote the mutual movement of said end edges (10, 11) towards each other along a longitudinal direction when said user operates said tie rod (36) and causes the free ends (33, 34) of said lock nut (32) to move towards each other.

14. Device as claimed in claim 1, **characterized in that** it comprises a temperature sensor (43) and a humidity sensor (44) located inside the cavity of said shell (7) and connected to said one or more electronic processing units (8), said sensors (43, 44) being designed to generate respective control signals (s₄₃, s₄₄) associated with the instant temperature and humidity values present inside said shell (7).

15. Device as claimed in claim 14, **characterized in that** said electronic control unit (2) is designed to process the signals (s₄₃, s₄₄) received from said temperature sensor (43) and said humidity sensor (44) in such a way as to generate an alarm signal (s_{A}') if the temperature or humidity value inside the shell (7) exceeds a respective predetermined threshold value.

## Patentansprüche

1. Elektronisches Gerät zur Erfassung und Überwachung von elektrischen Parametern (P), die mit einer oder mehreren physikalischen Größen verbunden sind, wobei das besagte Gerät geeignet ist, mit Flüssigkeiten und/oder Gasen in Kontakt zu kommen, und Folgendes umfasst:
- mindestens einen Sensor (S), der geeignet ist, eine oder mehrere physikalische Größen zu überwachen und den letzteren zugeordnete elektrische Parameter (P) zu generieren;
- eine oder mehrere elektronische Verarbeitungseinheiten (2), die mit dem besagten mindestens einen Sensor (S) verbunden sind;
- eine hohle Schutzschale (7), die geeignet ist, mindestens die besagte eine oder mehrere elektronische Verarbeitungseinheiten (2) aufzunehmen, wobei die besagte Schutzschale (7) zwei Halbschalen (8, 9) umfasst, die geeignet sind, gegenseitig gekoppelt zu werden,
- Kopplungsmittel (31), die mit der besagten Schale (7) verbunden und geeignet sind, die gegenseitige und lösbare Kopplung der besagten Halbschalen (8, 9) zu fördern und das Schließen der besagten Schale (7) zu fördern, sodass sie im Wesentlichen gas- und/oder flüssigkeitsdicht ist;
- Überwachungsmittel (45), die dazu bestimmt sind, ein Überwachungssignal (s₄₅) zu erzeugen, das je nach dem Kopplungszustand der besagten Halbschalen (8, 9) variieren kann,
wobei die besagte eine oder die besagten mehreren elektronischen Verarbeitungseinheiten (2) geeignet sind, das besagte Überwachungssignal (s₄₅) zu verarbeiten und ein Alarmsignal (s_{A}) zu erzeugen, wenn die besagte Schale (7) geschlossen, aber nicht vollständig gas- und/oder flüssigkeitsdicht ist,
**dadurch gekennzeichnet dass** das besagte Überwachungssignal (s₄₅) die Erfassung folgender Vorgänge erlaubt:
- die feste Kopplung der besagten Halbschalen (8, 9), die geeignet ist, die vollständige Isolierung der Schale gegen Feuchtigkeit und/oder Flüssigkeiten, die sich außerhalb derselben befinden, zu erreichen;
- die partielle Kopplung der besagten Halbschalen (8, 9), die geeignet ist, eine partielle Dichtheit gegen außerhalb der Schale befindliche Flüssigkeiten und/oder Gase zu erreichen, sodass diese in die besagte Schale (7) einströmen können.

2. Gerät nach Patentanspruch 1, **dadurch gekennzeichnet, dass** es jeweilige Endkanten (10, 11) aufweist, die an den besagten Halbschalen (8, 9) ausgebildet sind, wobei die besagten Endkanten (10, 11) geeignet sind, miteinander in Kontakt zu kommen oder leicht beabstandet zu sein, wenn die Halbschalen (8, 9) gegenseitig gekoppelt sind.

3. Gerät nach Patentanspruch 2, **dadurch gekennzeichnet, dass** sich die besagte Schutzschale (7) entlang einer Längsabwicklungsrichtung (L) erstreckt und die besagten Endkanten (10, 11) sich entlang einer Richtung (T) erstrecken, die im Wesentlichen quer und orthogonal zu der besagten Längsabwicklungsrichtung (L) verläuft.

4. Gerät nach Patentanspruch 2 oder 3, **dadurch gekennzeichnet, dass** es einen Sitz (15) aufweist, der in der Endkante (10) einer Halbschale (8) ausgebildet ist, wobei sich der besagte Sitz (15) über die gesamte Ausdehnung der Endkante (10) derart erstreckt, dass eine Dichtung (14), die dazu bestimmt ist, mit der Endkante (11) der anderen Halbschale (9) zusammenzuwirken, darin untergebracht werden kann.

5. Gerät nach einem oder mehreren der Patentansprüche 2 bis 4, **dadurch gekennzeichnet, dass** die besagten Überwachungsmittel (45) eine Vielzahl von Kontaktsensoren (46) umfassen, die den besagten Halbschalen (8, 9) der besagten Schale (7) zugeordnet sind, wobei die besagten Kontaktsensoren (46) mit der besagten einen oder den besagten mehreren Verarbeitungseinheiten (2) verbunden und geeignet sind, ein elektrisches Signal (S₄₅) zu erzeugen, das entsprechend dem gegenseitigen Abstand/der gegenseitigen Nähe der besagten Endkanten (10, 11) variieren kann, wenn die besagten Halbschalen (8, 9) gegenseitig gekoppelt sind.

6. Gerät nach Patentanspruch 5, **dadurch gekennzeichnet, dass** die besagten Kontaktsensoren entlang der Endkante (10; 11) einer einzelnen Halbschale (8, 9) oder entlang der Endkanten (10, 11) der beiden Halbschalen (8, 9) verteilt sind.

7. Gerät nach Patentanspruch 5 oder 6, **dadurch gekennzeichnet, dass** eine der besagten Halbschalen (8, 9) einen Vorsprung (17) aufweist, der mit der besagten Endkante (10, 11) einstückig ist und mit einer Oberfläche (18) versehen ist, die sich entlang einer Ebene (π) erstreckt, die im Wesentlichen quer zur besagten Entwicklungsrichtung (L) der besagten Schutzschale (7) liegt.

8. Gerät nach Patentanspruch 7, **dadurch gekennzeichnet, dass** die besagten Kontaktsensoren entlang der Oberfläche (18) des besagten Vorsprungs (17) verteilt sind.

9. Gerät nach Patentanspruch 3, **dadurch gekennzeichnet, dass** die besagten Halbschalen (8, 9) mit jeweiligen Verlängerungen (26, 27) versehen sind, die sich in der Nähe der besagten Endkanten (10, 11) befinden, wobei sich die besagten Querverlängerungen (26, 27) entlang von Richtungen erstrecken, die in Bezug auf die besagte Entwicklungsrichtung (L) der besagten Schale im Wesentlichen quer verlaufen, und so konfiguriert sind, dass sie in einer gegenseitig zugewandten Position angeordnet sind, sobald die besagten Halbschalen (8, 9) miteinander gekoppelt worden sind.

10. Gerät nach Patentanspruch 9, **dadurch gekennzeichnet, dass** die besagten Kopplungsmittel (31) eine Sicherungsmutter (32) umfassen, die mit einem Paar freier Enden (33, 34) und mit einer Innenfläche (35) versehen ist, die so geformt ist, dass sie im Wesentlichen komplementär zu den besagten Querverlängerungen (26, 27) der besagten Halbschalen (8, 9) komplementär ist, wobei die besagte Sicherungsmutter (32) dazu geeignet ist, auf den besagten Querverlängerungen (26, 27) so angeordnet zu werden, dass sie diese zumindest teilweise abdeckt und die Wechselwirkung zwischen ihrer Innenfläche (35) und der geformten Außenfläche (24, 25) der besagten Verlängerungen (26, 27) fördert.

11. Gerät nach Patentanspruch 10, **dadurch gekennzeichnet, dass** die besagten Kopplungsmittel (31) eine Zugstange (36) umfassen, die mit den freien Enden (33, 34) der besagten Sicherungsmutter (32) verbunden ist, wobei die besagte Zugstange (36) geeignet ist, von einem Benutzer betätigt zu werden, um die gegenseitige Bewegung der freien Enden (33, 34) der besagten Sicherungsmutter (32) aufeinander zu und voneinander weg zu fördern, sobald die besagte Sicherungsmutter (32) auf den Querverlängerungen (26, 27) der besagten Halbschalen (8, 9) positioniert worden ist.

12. Gerät nach einem oder mehreren der Patentansprüche 9 bis 11, **dadurch gekennzeichnet, dass** die Außenfläche (24, 25) der besagten Halbschalen (8, 9) an der jeweiligen Verlängerung (26, 27) einen geneigten Abschnitt (29, 30) aufweist, der zu einem entsprechenden Konvergenzpunkt konvergiert, der außerhalb der besagten Schale (7) liegt.

13. Gerät nach Patentanspruch 12, **dadurch gekennzeichnet, dass** die Innenfläche (35) der besagten Sicherungsmutter (32) so geformt ist, dass sie komplementär zu den besagten geneigten Abschnitten (29, 30) ist, die an der Außenfläche (24, 25) der besagten Halbschalen (8, 9) ausgebildet sind, um die gegenseitige Bewegung der besagten Endkanten (10, 11) aufeinander zu entlang einer Längsrichtung zu fördern, wenn der besagte Benutzer die besagte Zugstange (36) betätigt und bewirkt, dass sich die freien Enden (33, 34) der besagten Sicherungsmutter (32) aufeinander zu bewegen.

14. Gerät nach Patentanspruch 1, **dadurch gekennzeichnet, dass** es einen Temperatursensor (43) und einen Feuchtigkeitssensor (44) umfasst, die sich im Inneren des Hohlraums der besagten Schale (7) befinden und mit der besagten einen oder den besagten mehreren elektronischen Verarbeitungseinheiten (8) verbunden sind, wobei die besagten Sensoren (43, 44) so ausgelegt sind, dass sie jeweilige Steuersignale (S₄₃, S₄₄) erzeugen, die mit den momentanen Temperatur- und Feuchtigkeitswerten im Inneren der besagten Schale (7) verbunden sind.

15. Gerät nach Patentanspruch 14, **dadurch gekennzeichnet, dass** die besagte elektronische Steuereinheit (2) so ausgelegt ist, dass sie die von dem besagten Temperatursensor (43) und dem besagten Feuchtigkeitssensor (44) empfangenen Signale (S₄₃, S₄₄) so verarbeitet, dass ein Alarmsignal (s_{A}') erzeugt wird, wenn der Temperatur- oder Feuchtigkeitswert im Inneren der Schale (7) einen jeweiligen vorgegebenen Schwellenwert überschreitet.

## Revendications

1. Dispositif électronique pour détecter et surveiller des paramètres électriques (P) associés à une ou plusieurs quantités physiques, ledit dispositif étant adapté pour entrer en contact avec des fluides et/ou des gaz et comprenant:
- au moins un capteur (S) indiqué pour surveiller une ou plusieurs quantités physiques et pour générer des paramètres électriques (P) associés à ces dernières;
- une ou plusieurs unités de traitement électronique (2) connectées audit au moins un capteur (S);
- une coque de protection creuse (7) indiquée pour contenir au moins ladite une ou plusieurs unités de traitement électroniques (2), ladite coque de protection (7) comprenant deux demi-coques (8, 9) adaptées pour être mutuellement couplées l'une à l'autre;
- des moyens d'accouplement (31) associés à ladite coque (7) et indiqués pour favoriser le couplage mutuel et amovible desdites demi-coques (8, 9) et pour favoriser la fermeture de ladite coque (7) de manière à ce qu'elle soit essentiellement étanche aux gaz et/ou aux fluides;
- des moyens de surveillance (45) conçus pour générer un signal de surveillance (s₄₅) qui peut varier en fonction de l'état d'accouplement desdites demi-coques (8, 9),
où ladite une ou plusieurs unités de traitement électroniques (2) est indiquée pour traiter ledit signal de surveillance (S₄₅) et pour générer un signal d'alarme (s_{A}) lorsque ladite coque (7) est fermée mais pas complètement étanche aux gaz et/ou aux fluides,
**caractérisé en ce que** ledit signal de surveillance (S₄₅) permet de détecter :
- l'accouplement étanche desdites demi-coques (8, 9), apte à obtenir l'isolation complète de la coque de l'humidité et/ou des fluides qui se trouvent à l'extérieur de celle-ci ;
- l'accouplement partiel desdites demi-coquilles (8, 9), indiqué pour obtenir une étanchéité partielle par rapport aux fluides et/ou aux gaz qui sont à l'extérieur de la coquille, de sorte qu'ils puissent s'écouler dans ladite coque (7).

2. Dispositif selon la revendication 1, **caractérisé en ce qu'**il comprend des bords d'extrémité respectifs (10, 11) réalisés sur lesdites demi-coques (8, 9), lesdits bords d'extrémité (10, 11) étant indiqués pour venir en contact l'un avec l'autre ou pour être légèrement espacés lorsque les demi-coques (8, 9) sont mutuellement couplées.

3. Dispositif selon la revendication 2, **caractérisé en ce que** ladite coque de protection (7) s'étend le long d'une direction longitudinale de développement (L) et lesdits bords d'extrémité (10, 11) s'étendent le long d'une direction (T) qui est sensiblement transversale et orthogonale à ladite direction longitudinale de développement (L).

4. Dispositif selon la revendication 2 ou 3, **caractérisé en ce qu'**il comprend un siège (15) réalisé dans le bord d'extrémité (10) d'une demi-coque (8), ledit siège (15) s'étendant sur toute l'extension du bord d'extrémité (10) de manière à permettre à un joint d'étanchéité (14), conçu pour interagir avec le bord d'extrémité (11) de l'autre demi-coque (9), d'y être logé.

5. Dispositif selon l'une ou plusieurs des revendications de 2 à 4, **caractérisé en ce que** lesdits moyens de surveillance (45) comprennent une pluralité de capteurs de contact (46) associés auxdites demi-coques (8, 9) de ladite coque (7), lesdits capteurs de contact (46) étant connectés à ladite une ou plusieurs unités de traitement (2) et indiqués pour générer un signal électrique (S₄₅) qui peut varier selon la distance/proximité mutuelle desdits bords d'extrémité (10, 11) quand lesdites demi-coques (8, 9) sont mutuellement couplées.

6. Dispositif selon la revendication 5, **caractérisé en ce que** lesdits capteurs de contact sont distribués le long du bord d'extrémité (10 ; 11) d'une seule demi-coque (8, 9) ou le long des bords d'extrémité (10, 11) des deux demi-coques (8, 9).

7. Dispositif selon la revendication 5 ou 6, **caractérisé en ce que** l'une desdites demi-coques (8, 9) comprend une saillie (17) qui est solidaire dudit bord d'extrémité (10, 11) et pourvue d'une surface (18) s'étendant le long d'un plan (π) qui est essentiellement transversal par rapport à ladite direction de développement (L) de ladite coque de protection (7).

8. Dispositif selon la revendication 7, **caractérisé en ce que** lesdits capteurs de contact sont distribués le long de la surface (18) de ladite saillie (17).

9. Dispositif selon la revendication 3, **caractérisé en ce que** lesdites demi-coques (8, 9) sont pourvues d'extensions respectives (26, 27) situées à proximité desdits bords d'extrémité (10, 11), lesdites extensions transversales (26, 27) s'étendant le long de directions qui sont essentiellement transversales par rapport à ladite direction de développement (L) de ladite coque et étant configurées pour être disposées dans une position mutuellement opposée une fois que lesdites demi-coques (8, 9) ont été couplées ensemble.

10. Dispositif selon la revendication 9, **caractérisé en ce que** lesdits moyens d'accouplement (31) comprennent un écrou de blocage (32) pourvu d'une paire d'extrémités libres (33, 34) et d'une surface interne (35) qui est galbée de telle manière qu'elle est essentiellement complémentaire auxdites extensions transversales (26, 27) desdites demi-coques (8, 9), ledit écrou de blocage (32) étant indiqué pour être placé sur lesdites extensions transversales (26, 27) de manière à les couvrir au moins partiellement et à favoriser l'interaction entre sa surface interne (35) et la surface externe galbée (24, 25) desdites extensions (26, 27).

11. Dispositif selon la revendication 10, **caractérisé en ce que** lesdits moyens d'accouplement (31) comprennent un tirant (36) associé aux extrémités libres (33, 34) dudit écrou de blocage (32), ledit tirant (36) étant indiqué pour être actionné par un utilisateur pour favoriser le mouvement mutuel des extrémités libres (33, 34) dudit écrou de blocage (32) de rapprochement l'une vers l'autre et d'éloignement l'une de l'autre une fois que ledit écrou de blocage (32) a été positionné sur les extensions transversales (26, 27) desdites demi-coques (8, 9).

12. Dispositif selon l'une ou plusieurs des revendications de 9 à 11, **caractérisé en ce que** la surface extérieure (24, 25) desdites demi-coques (8, 9) présente, sur l'extension respective (26, 27), une section inclinée (29, 30) qui est convergente vers un point de convergence correspondant situé à l'extérieur de ladite coque (7).

13. Dispositif selon la revendication 12, **caractérisé en ce que** la surface intérieure (35) dudit écrou de blocage (32) est galbée de telle manière qu'elle est complémentaire auxdites sections inclinées (29, 30) réalisées sur la surface extérieure (24, 25) desdites demi-coques (8, 9) pour favoriser le mouvement mutuel desdits bords d'extrémité (10, 11) l'un vers l'autre le long d'une direction longitudinale quand ledit utilisateur actionne ledit tirant (36) et fait en sorte que les extrémités libres (33, 34) dudit écrou de blocage (32) se déplacent l'une vers l'autre.

14. Dispositif selon la revendication 1, **caractérisé en ce qu'**il comprend un capteur de température (43) et un capteur d'humidité (44) situés à l'intérieur de la cavité de ladite coque (7) et connectés à ladite une ou plusieurs unités de traitement électroniques (8), lesdits capteurs (43, 44) étant conçus pour générer des signaux de commande respectifs (S₄₃, S₄₄) associés aux valeurs instantanées de température et d'humidité présentes à l'intérieur de ladite coque (7).

15. Dispositif selon la revendication 14, **caractérisé en ce que** ladite unité de commande électronique (2) est conçue pour traiter les signaux (S₄₃, S₄₄) reçus dudit capteur de température (43) et dudit capteur d'humidité (44) de manière à générer un signal d'alarme (s_{A}') si la valeur de la température ou de l'humidité à l'intérieur de la coque (7) dépasse une valeur de seuil prédéterminée respective.
